# EUROPÄISCHE PATENTSCHRIFT

(11) **EP 3 544 807 B1**
(45) Veröffentlichungstag und Bekanntmachung des Hinweises auf die Patenterteilung: **07.04.2021**
(21) Anmeldenummer: 17797071.2
(22) Anmeldetag: 24.10.2017
(51) Int. Cl.: B32B 15/01, B23K 20/227, C22C 21/00, C22C 21/02, C22C 21/06, F16B 19/02

(54) **ADAPTERBAUTEIL, VERFAHREN ZUR HERSTELLUNG EINES ADAPTERBAUTEILS UND VERBINDUNGSANORDNUNG MIT ADAPTERBAUTEIL**
ADAPTER COMPONENT, METHOD FOR PRODUCING AN ADAPTER COMPONENT AND CONNECTION ASSEMBLY HAVING AN ADAPTER COMPONENT
ÉLÉMENT ADAPTATEUR, PROCÉDÉ DE FABRICATION D'UN ÉLÉMENT ADAPTATEUR, ET SYSTÈME D'ASSEMBLAGE MUNI D'UN ÉLÉMENT ADAPTATEUR

(30) Priorität: 24.11.2016 DE 102016223263
(43) Veröffentlichungstag der Anmeldung: 02.10.2019
(73) Patentinhaber: Bayerische Motoren Werke Aktiengesellschaft, 80809 München (DE)
(72) Erfinder: LIFKA, Carsten, 81245 München (DE)
(86) Internationale Anmeldenummer: PCT/EP2017/077043
(87) Internationale Veröffentlichungsnummer: WO 2018/095672

(56) Entgegenhaltungen:
- DE-A1- 10 155 104
- DE-A1- 19 746 165
- DE-A1- 19 939 977
- DE-A1-102004 034 817
- DE-A1-102006 014 988
- DE-B3-102015 100 263
- DE-C1- 3 739 300
- US-A- 3 479 730
- US-A1- 2008 268 279

## Beschreibung

Die vorliegende Erfindung betrifft ein Adapterbauteil, insbesondere ein Adapterbauteil für dynamisch hochbelastete Strukturen, sowie ein Verfahren zur Herstellung eines Adapterbauteils. Das Adapterbauteil kann beispielsweise zum Verbinden zweier Komponenten eines Fahrzeugstrukturbauteils verwendet werden. Weiterhin betrifft die Erfindung eine Verbindungsanordnung mit einem Adapterbauteil.

Die Druckschrift DE 37 39 300 C1 beschreibt ein Verfahren zur Herstellung walzplattierter Bleche, wobei einem Stahlblech als Trägermaterial ein Aluminiumblech als Beschichtungsmaterial zugeführt wird und beide unter dem Einfluss einer Verformung miteinander verbunden werden. Dabei wird dem Stahlblech ein mehrschichtiges Aluminiumblech zugeführt, dessen zum Stahlblech gerichtete äußere Schicht einen höheren Siliziumgehalt aufweist als die andere äußere Schicht des Aluminiumbleches.

Die Druckschrift DE 10 2004 034 817 A1 beschreibt einen Adapter zum Verbinden zweier Komponenten aus unterschiedlichen Materialien, wobei der Adapter ein Grundelement aus einem ersten Werkstoff aufweist, das durch eine Fügeoperation form- und kraftschlüssig mit einem Anschlusselement aus dem zweiten Werkstoff unlösbar verbunden ist. Dadurch ist ein Anschluss eines aus einem ersten Werkstoff bestehenden Bauteils an ein aus einem zweiten Werkstoff bestehendes Bauelement möglich. Das Grundelement kann dazu beispielsweise als Platte, das Anschlusselement als Platte oder T-Profilstück ausgeführt sein. Bei den Werkstoffen kann es sich z.B. um einen Stahlwerkstoff bzw. einen Aluminiumwerkstoff handeln.

Der Adapter ist jedoch, insbesondere aufgrund des sehr weichen Aluminiums, nicht für den Einsatz in dynamisch hochbelasteten Strukturen, wie beispielsweise bei einem Achsträger, geeignet. Die für eine anschließende Bearbeitung erforderliche hohe Rundlaufgenauigkeit (Kalibrierung) kann teilweise mittels einer Kugel erreicht werden, welche durch den Rohradapter gepresst wird. Diese Art der Kalibrierung ist jedoch unwirtschaftlich und erhöht die Rundlaufgenauigkeit nicht im gewünschten Maße.

Es ist daher zumindest eine Aufgabe der vorliegenden Erfindung, ein Adapterbauteil für dynamisch hochbelastete Strukturen anzugeben. Vorzugsweise weist das Adapterbauteil eine hohe Rundlaufgenauigkeit auf. Weitere Aufgaben sind es, ein Verfahren zur Herstellung eines Adapterbauteils sowie eine Verbindungsanordnung mit einem Adapterbauteil anzugeben.

Diese Aufgaben werden durch ein Gegenstand und ein Verfahren gemäß den unabhängigen Patentansprüchen gelöst. Vorteilhafte Ausführungsformen und Weiterbildungen gehen weiterhin aus den abhängigen Patentansprüchen, der nachfolgenden Beschreibung und aus den Zeichnungen hervor.

Das hier beschriebene Adapterbauteil ist vorzugsweise zum Verbinden zweier Bauteile oder zweier Baugruppen ausgebildet. Beispielsweise können die zwei Bauteile unterschiedliche Werkstoffe aufweisen oder aus unterschiedlichen Werkstoffen bestehen. Das Adapterbauteil kann insbesondere zum Verbinden eines Stahlbauteils oder einer Stahl-Baugruppe mit einem Leichtmetallbauteil bzw. einer Leichtmetall-Baugruppe ausgebildet sein. Weiterhin kann das Adapterbauteil hier und im Folgenden auch als Hybridadapter bezeichnet werden.

Das Adapterbauteil weist einen Grundkörper auf, der aus einem ungeformten mehrschichtigen Blech gebildet ist. Das mehrschichtige Blech weist mindestens eine Stahllastübertragungsschicht, eine Zwischenbindungsschicht und eine Leichtmetalllastübertragungsschicht auf, wobei die Zwischenbindungsschicht zwischen der Stahllastübertragungsschicht und der Leichtmetalllastübertragungsschicht angeordnet ist. Vorzugsweise weisen die Zwischenbindungsschicht und die Leichtmetalllastübertragungsschicht ein Leichtmetall auf, wobei die Leichtmetalllastübertragungsschicht eine größere mechanische Stabilität als die Zwischenbindungsschicht aufweist.

Im Folgenden wird zunächst auf das mehrschichtige Blech, aus welchem der Grundkörper des Adapterbauteils gebildet ist, eingegangen. Anschließend wird das Adapterbauteil bzw. die Herstellung des Adapterbauteils ausgehend von dem mehrschichtigen Blech beschrieben.

Unter einem mehrschichtigen Blech wird im Rahmen der Erfindung ein band- oder plattenförmiges mehrschichtiges Objekt mit einer Blechdicke und einer Blechbreite verstanden. Bei einer plattenförmigen Ausbildung des mehrschichtigen Blechs ist eine Blechlänge definiert bzw. bestimmbar, bei einer bandförmigen Ausbildung des mehrschichtigen Blechs wird eine Blechlänge als endlos bezeichnet. Das mehrschichtige Blech weist mindestens eine Stahllastübertragungsschicht, mindestens eine Zwischenbindungsschicht sowie mindestens eine Leichtmetalllastübertragungsschicht auf. Besonders bevorzugt weist das mehrschichtige Blech genau eine Stahllastübertragungsschicht und genau eine Leichtmetalllastübertragungsschicht auf, wobei das mehrschichtige Blech eine oder mehrere Zwischenbindungsschichten aufweisen kann, von denen eine erste Zwischenbindungsschicht, die eine besonders gute Bindung mit der Stahllastübertragungsschicht ausbildet, an der Stahllastübertragungsschicht und eine zweite Zwischenbindungsschicht, die eine besonders gute Bindung mit der Leichtmetalllastübertragungsschicht ausbildet, an der Leichtmetalllastübertragungsschicht angeordnet ist. Insbesondere Bevorzugt weist das mehrschichtige Blech genau eine Zwischenbindungsschicht auf, die sowohl zur Ausbildung einer guten Bindung mit der Stahllastübertragungsschicht als auch der Leichtmetalllastübertragungsschicht ausgebildet ist.

Die Stahllastübertragungsschicht weist vorzugsweise eine Legierungszusammensetzung, insbesondere eine Duktilität, auf, die eine Herstellung des mehrschichtigen Blechs durch Walzplattieren begünstigt. Darüber hinaus weist die Stahllastübertragungsschicht vorzugsweise eine derartige Festigkeit auf, dass eine sichere Verbindung von zwei Bauteilen einer Fahrzeugstruktur über ein aus dem mehrschichtigen Blech hergestellten Adapterbauteil gewährleistbar ist, welche mechanischen Belastungen beim Betrieb des Fahrzeugs standhält.

Die Leichtmetalllastübertragungsschicht weist ein Leichtmetall auf. Das Leichtmetall liegt in der Leichtmetalllastübertragungsschicht vorzugsweise in einer derartigen Konzentration vor, dass ein Verschweißen der Leichtmetalllastübertragungsschicht mit einem Leichtmetallbauteil desselben Leichtmetalls gewährleistet ist. Die Leichtmetalllastübertragungsschicht weist vorzugsweise eine Legierungszusammensetzung, insbesondere eine Duktilität, auf, die eine Herstellung des mehrschichtigen Blechs durch Walzplattieren begünstigt. Darüber hinaus weist die Leichtmetalllastübertragungsschicht vorzugsweise eine derartige Festigkeit auf, dass eine sichere Verbindung von zwei Bauteilen einer Fahrzeugstruktur über ein aus dem mehrschichtigen Blech hergestellten Adapterbauteil gewährleistbar ist, welche mechanischen Belastungen beim Betrieb des Fahrzeugs standhält. Die Stahllastübertragungsschicht und Leichtmetalllastübertragungsschicht sind vorzugsweise derart ausgebildet, durch Walzplattieren nur eine unzureichende Bindung miteinander auszubilden, wenn keine Zwischenbindungsschicht vorhanden wäre.

Die Zwischenbindungsschicht ist daher ausgebildet, eine sichere Verbindung zwischen der Stahllastübertragungsschicht und der Leichtmetalllastübertragungsschicht bereitzustellen, die vorzugsweise durch Walzplattieren erzielbar ist. Hierfür weist die Zwischenbindungsschicht ebenfalls ein Leichtmetall, vorzugsweise dasselbe Leichtmetall wie die Leichtmetalllastübertragungsschicht, auf, um eine Bindung mit der Leichtmetalllastübertragungsschicht zu verbessern. Die Zwischenbindungsschicht weist vorzugsweise eine Legierungszusammensetzung, insbesondere eine Duktilität, auf, die eine Herstellung des mehrschichtigen Blechs durch Walzplattieren begünstigt. Darüber hinaus weist die Zwischenbindungsschicht vorzugsweise eine derartige Festigkeit auf, dass eine sichere Verbindung von zwei Bauteilen einer Fahrzeugstruktur über ein aus dem mehrschichtigen Blech hergestellten Adapterbauteil gewährleistbar ist, welche mechanischen Belastungen beim Betrieb des Fahrzeugs standhält.

Erfindungsgemäß weist die Leichtmetalllastübertragungsschicht eine höhere Streckgrenze und/oder Zugfestigkeit und/oder Härte, als die Zwischenbindungsschicht auf.

Ein mehrschichtiges Blech hat gegenüber bekannten mehrschichtigen Blechen den Vorteil, dass dieses zum Herstellen einer Verbindung zwischen einem Stahlbauteil und einem Leichtmetallbauteil, die zum Widerstehen hoher dynamischer Lasten ausgebildet ist, besonders geeignet ist. Daher ist das mehrschichtige Blech besonders zur Verwendung in Fahrzeugstrukturen von Kraftfahrzeugen in Leichtbauweise geeignet, um eine sichere sowie hoch beanspruchbare Verbindung von Leichtmetallbauteilen und Stahlbauteilen mit einfachen Mitteln sowie kostengünstig zu gewährleisten.

Gemäß einer weiteren Ausführungsform kann bei dem mehrschichtigen Blech vorgesehen sein, dass die Leichtmetalllastübertragungsschicht eine Aluminiumlegierung (Al-Legierung) aufweist, insbesondere eine höherfeste Al-Legierung, welche z.B. zumindest die Festigkeit von EN AW 5754 aufweist. Eine Al-Legierung hat den Vorteil, dass Aluminiumbauteile für eine Fahrzeugstruktur mit Stahlbauteilen der Fahrzeugstruktur über ein aus dem mehrschichtigen Blech hergestelltes Adapterbauteil zuverlässig miteinander verbindbar sind. Aluminiumbauteile sind aufgrund der geringen Dichte von Aluminium insbesondere zur Einsparung von Gewicht bei Fahrzeugen gut geeignet. Eine höherfeste Al-Legierung hat den Vorteil, dass eine Beanspruchbarkeit des mehrschichtigen Blechs, insbesondere eines aus dem mehrschichtigen Blech hergestellten Adapterbauteils verbessert ist. Dies ist insbesondere bei der Verwendung in einer Fahrzeugstruktur eines Fahrzeugs von Vorteil, da hierdurch eine Belastbarkeit der Fahrzeugstruktur verbesserbar sowie ein Verschleiß der Fahrzeugstruktur, insbesondere eine Erhöhung der Betriebsfestigkeit oder der Ermüdungsfestigkeit der Fahrzeugstruktur, reduzierbar ist.

Gemäß einer weiteren Ausführungsform kann die Leichtmetalllastübertragungsschicht eine AlMg₃-Legierung aufweisen oder aus einer AlMg₃-Legierung bestehen. AlMg₃ wird auch als EN AW 5754 bezeichnet. Eine AlMg₃-Legierung ist besonders mechanisch beanspruchbar und somit zur Herstellung einer hochbelastbaren Fahrzeugstruktur besonders geeignet.

Es ist bevorzugt, dass die Zwischenbindungsschicht modifiziertes Al 99 aufweist oder aus modifiziertem Al 99 besteht. Al 99 wird auch als EN AW 1200 bezeichnet. Das Al 99 ist vorzugsweise derart modifiziert, dass eine Verbindung mit der Stahllastübertragungsschicht und/oder der Leichtmetalllastübertragungsschicht, insbesondere eine durch Walzplattieren erzielte Verbindung, verbessert ist. Das modifizierte Al 99 weist vorzugsweise eine feinere Gefügeausbildung als herkömmliches Al 99 auf. Ein mehrschichtiges Blech mit einer derartigen Zwischenbindungsschicht ist für hochbelastete Adapterbauteile aufgrund vorteilhafter mechanischer Eigenschaften besonders geeignet.

Vorzugsweise weist die Stahllastübertragungsschicht einen Sondergütestahl auf oder besteht aus einem Sondergütestahl. Ein Sondergütestahl ist im Rahmen der Erfindung ein Stahl, der eine ausreichende mechanische Stabilität aufweist, um bei einem Adapterbauteil einer Fahrzeugstruktur auftretenden hohen dynamischen Belastungen zu widerstehen. Ferner weist der Sondergütestahl eine höhere Festigkeit bei vorzugsweise verbesserter plastischer Verformbarkeit als ein herkömmlicher Stahl auf. Vorzugsweise weist der Sondergütestahl eine verbesserte Verbindbarkeit mit der Zwischenbindungsschicht auf. Hierdurch ist der Sondergütestahl zum Herstellen des mehrschichtigen Blechs durch Walzplattieren besonders geeignet.

Es ist weiterhin bevorzugt, dass die Leichtmetalllastübertragungsschicht einen Siliziumgehalt von weniger als 20 Gew.-%, insbesondere von weniger als 5 Gew.-% aufweist. Ein bevorzugter minimaler Siliziumgehalt der Leichtmetalllastübertragungsschicht beträgt 0,3 Gew.-%. Vorzugsweise beträgt der Siliziumgehalt der Leichtmetalllastübertragungsschicht etwa 0,4 Gew.-%. Derartige Leichtmetalllastübertragungsschichten mit einem relativ geringen Siliziumgehalt haben den Vorteil einer besonders hohen Festigkeit und/oder Ermüdungsfestigkeit, insbesondere einer geringeren mechanische Versprödung.

Gemäß einer bevorzugten Ausgestaltung eines hier beschriebenen mehrschichtigen Blechs weist die Stahllastübertragungsschicht eine Stahlschichtdicke zwischen 0,8 und 2,3 mm und/oder die Zwischenbindungsschicht mit der Leichtmetalllastübertragungsschicht zusammen eine Schichtdickensumme zwischen 2,0 und 7,0 mm, vorzugsweise zwischen 2,0 und 5,0 mm, insbesondere zwischen 2,0 und 2,9 mm, auf. Dabei ist es bevorzugt, dass die Stahllastübertragungsschicht eine Stahlschichtdicke zwischen 0,8 und 2,3 mm und die Zwischenbindungsschicht mit der Leichtmetalllastübertragungsschicht zusammen eine Schichtdickensumme zwischen 2,0 und 2,9 mm aufweisen. Die Schichtdickensumme ist eine Summe einer Zwischenschichtdicke der Zwischenbindungsschicht und einer Lastschichtdicke der Leichtmetalllastübertragungsschicht. Derartige Stahlschichtdicken bzw.

Schichtdickensummen haben den Vorteil, dass diese mittels eines Walzplattierverfahrens mit einfachen Mitteln sowie zuverlässig herstellbar sind, so dass eine ausreichende Anbindung der Stahllastübertragungsschicht mit der Zwischenbindungsschicht sowie der Zwischenbindungsschicht mit der Leichtmetalllastübertragungsschicht gewährleistet ist.

Weiter bevorzugt ist eine Lastschichtdicke der Leichtmetalllastübertragungsschicht mindestens doppelt so groß wie eine Zwischenschichtdicke der Zwischenbindungsschicht. Durch eine relativ dünne Zwischenbindungsschicht sowie eine relativ dicke Leichtmetalllastübertragungsschicht kann eine Festigkeit des mehrschichtigen Blechs verbessert werden. Dabei ist es bevorzugt, dass die Zwischenschichtdicke mindestens eine minimale Schichtdicke von 0,2 mm aufweist. Somit ist beispielsweise eine dynamische Belastbarkeit einer Fahrzeugstruktur, die mindestens ein aus einem derartigen mehrschichtigen Blech hergestelltes Adapterbauteil aufweist, verbesserbar.

Erfindungsgemäß weist der Grundkörper des Adapterbauteils die Form eines Hohlzylinders auf. Erfindungsgemäß wird das mehrschichtige Blech zur Herstellung des Grundkörpers derart umgeformt, dass das mehrschichtige Blech nach dem Umformvorgang einen Körper mit einer rohrartigen Form bzw. einer hohlzylindrischen Form bildet. Das mehrschichtige Blech kann beispielsweise derart umgeformt sein, dass die Stahllastübertragungsschicht im Inneren des hohlzylindrischen Grundkörpers angeordnet ist und die Leichtmetalllastübertragungsschicht die äußere Oberfläche des hohlzylindrischen Grundkörpers bildet. Alternativ kann das mehrschichtige Blech z.B. derart umgeformt sein, dass die Leichtmetalllastübertragungsschicht im Inneren des hohlzylindrischen Grundkörpers angeordnet ist und die Stahllastübertragungsschicht die äußere Oberfläche des hohlzylindrischen Grundkörpers bildet.

Gemäß einer weiteren Ausführungsform ist die Stahllastübertragungsschicht in einem an einen ersten Öffnungsbereich des hohlzylindrischen Grundkörpers angrenzenden Teilabschnitt nicht von der Zwischenbindungsschicht und/oder nicht von der Leichtmetalllastübertragungsschicht bedeckt. Beispielsweise kann dieser Teilabschnitt des Grundkörpers, welcher an den ersten Öffnungsbereich angrenzt, lediglich durch die Stahllastübertragungsschicht gebildet sein. Die Zwischenbindungsschicht und/oder die Leichtmetalllastübertragungsschicht können in diesem Bereich, z.B. durch eine spannende Bearbeitung oder durch Erodieren, entfernt worden sein, sodass ein aluminiumfreier Endabschnitt zum Verschweißen mit einem Stahlbauteil zur Verfügung steht. Da beim Schweißen von Stahl mit sehr hohen Temperaturen geschweißt wird, würde nämlich eine in diesem Bereich angeordnete Aluminiumschicht schmelzen und in das Stahlschmelzbad fließen, wodurch spröde intermetallische Phasen ausgebildet würden, welche die Festigkeit der Verbindung zwischen dem Adapterbauteil und dem Stahlbauteil absenken würden.

Gemäß einer weiteren Ausführungsform sind die Zwischenbindungsschicht und/oder die Leichtmetalllastübertragungsschicht in einem an einen zweiten Öffnungsbereich des hohlzylindrischen Grundkörpers angrenzenden Teilabschnitt nicht von der Stahllastübertragungsschicht bedeckt. Der zweite Öffnungsbereich kann beispielsweise an einem dem ersten Öffnungsbereich gegenüberliegenden Ende des hohlzylindrischen Grundkörpers ausgebildet sein. Dieser Bereich kann insbesondere zum Verschweißen des Adapterbauteils mit einem Leichtmetallbauteil bzw. Aluminiumbauteil ausgebildet sein. Vorteilhafterweise kann dadurch ein Aufreißen der Schweißnaht bei dynamisch hochbelasteten Strukturen verhindert werden. Die Stahllastübertragungsschicht kann in dem an den zweiten Öffnungsbereich angrenzenden Teilabschnitt, beispielsweise durch eine spannende Bearbeitung, entfernt worden sein.

Gemäß einer weiteren Ausführungsform weist die Stahllastübertragungsschicht eine Schichtdicke auf, wobei ausgehend vom ersten Öffnungsbereich in Richtung des zweiten Öffnungsbereichs abnimmt. Beispielsweise kann die Stahllastübertragungsschicht in einem ersten Abschnitt, der sich z.B. vom ersten Öffnungsbereich in Richtung des zweiten Öffnungsbereichs erstreckt, eine konstante Schichtdicke aufweisen und in einem an den ersten Abschnitt angrenzenden zweiten Abschnitt eine in Richtung des zweiten Öffnungsbereichs kontinuierlich abnehmende Schichtdicke aufweisen. Dadurch kann vorteilhafterweise ein Steifigkeitssprung durch die Gestaltung des Übergangs von Stahl zu Aluminium vermindert werden.

Das hier beschriebene Adapterbauteil hat gegenüber bekannten Adapterbauteilen beispielsweise den Vorteil, dass dieses zum Herstellen einer Verbindung zwischen einem Stahlbauteil und einem Leichtmetallbauteil, die zum Widerstehen hoher dynamischer Lasten ausgebildet ist, besonders geeignet ist. Daher ist das Adapterbauteil besonders zur Verwendung in Fahrzeugstrukturen von Kraftfahrzeugen in Leichtbauweise geeignet, um mit einfachen Mitteln sowie kostengünstig eine sichere sowie hoch beanspruchbare Verbindung von Leichtmetallbauteilen und Stahlbauteilen zu gewährleisten.

Weiterhin wird eine Verbindungsanordnung angegeben, die ein erstes Bauteil aus einem ersten Werkstoff, ein zweites Bauteil aus einem zweiten Werkstoff sowie ein hier beschriebenes Adapterbauteil aufweist. Das Adapterbauteil kann ein oder mehrere Merkmale der vorgenannten Ausführungsformen aufweisen. Das erste Bauteil ist vorzugsweise mittels des Adapterbauteils mit dem zweiten Bauteil verbunden. Bei dem ersten Bauteil kann es sich z.B. um ein Stahlbauteil handeln. Das zweite Bauteil kann z.B. als Leichtmetallbauteil, wie z.B. als Aluminiumbauteil, ausgebildet sein. Dabei ist die Stahllastübertragungsschicht des Adapterbauteils vorzugsweise mit dem Stahlbauteil verbunden und die Leichtmetalllastübertragungsschicht des Adapterbauteils ist vorzugsweise mit dem Leichtmetallbauteil bzw. mit dem Aluminiumbauteil verbunden. Insbesondere kann das Stahlbauteil mit der Stahllastübertragungsschicht verschweißt sein und die Leichtmetalllastübertragungsschicht kann mit dem Leichtmetallbauteil durch ein thermisches Fügeverfahren, wie z.B. durch ein Schweißverfahren, verbunden sein.

Des Weiteren wird ein Verfahren zur Herstellung eines hier beschriebenen Adapterbauteils angegeben. Das vorangehende beschriebene Adapterbauteil kann insbesondere durch das Verfahren herstellbar bzw. hergestellt sein. Somit können die vorangehend und nachfolgend beschriebenen Merkmale sowohl für das Adapterbauteil als auch für das Verfahren zur Herstellung des Adapterbauteils gelten.

Bei dem Verfahren wird vorzugsweise ein mehrschichtiges Blech, welches eine Stahllastübertragungsschicht, eine Leichtmetalllastübertragungsschicht und eine zwischen der Stahllastübertragungsschicht und der Leichtmetalllastübertragungsschicht angeordnete Zwischenbindungsschicht aufweist, hergestellt. Anschließend wird das mehrschichtige Blech zu einem hohlzylindrischen Grundkörper umgeformt. Beispielsweise kann das mehrschichtige Blech derart umgeformt werden, dass die Stahllastübertragungsschicht im Inneren des hohlzylindrischen Grundkörpers und die Leichtmetalllastübertragungsschicht außen angeordnet ist. Alternativ kann das mehrschichtige Blech derart umgeformt werden, dass die Leichtmetalllastübertragungsschicht innen und die Stahllastübertragungsschicht außen angeordnet ist.

Gemäß einer weiteren Ausführungsform wird nach dem Umformen des mehrschichtigen Blechs eine Nahtstelle, welche durch zwei durch das Umformen zusammengebrachte Enden des mehrschichtigen Blechs definiert wird, durch ein Fügeverfahren geschlossen. Alternativ kann die Nahtstelle offen gelassen, d.h. nicht geschlossen werden.

Gemäß einer weiteren Ausführungsform werden an einen ersten Öffnungsbereich des hohlzylindrischen Grundkörpers angrenzende Teilabschnitte der Leichtmetalllastübertragungsschicht und/oder der Zwischenbindungsschicht entfernt. Vorzugsweise werden diese Teilabschnitte vollständig entfernt, sodass das Adapterbauteil in einem an den ersten Öffnungsbereich angrenzenden Bereich lediglich durch die Stahllastübertragungsschicht ausgebildet wird. Dadurch kann vorteilhafterweise ein aluminiumfreier Endbereich zum Verschweißen des Adapterbauteils mit einem Stahlbauteil bereitgestellt werden. Das Entfernen kann beispielsweise durch eine spannende Bearbeitung oder durch Erodieren erfolgen.

Gemäß einer weiteren Ausführungsform wird ein an einen zweiten Öffnungsbereich des hohlzylindrischen Grundkörpers angrenzender Teilabschnitt der Stahllastübertragungsschicht, z.B. durch eine spannende Bearbeitung oder durch Erodieren, entfernt. Der zweite Öffnungsbereich liegt vorzugsweise auf einer dem ersten Öffnungsbereich gegenüberliegenden Seite des Adapterbauteils Vorzugsweise wird zumindest ein Teilabschnitt der Stahllastübertragungsschicht vollständig entfernt, sodass ein stahlfreier Endbereich zum Verschweißen des Adapterbauteils mit einem Leichtmetallbauteil zur Verfügung gestellt werden kann.

Weiterhin kann die Stahllastübertragungsschicht derart entfernt werden, dass die Schichtdicke der Stahllastübertragungsschicht in Richtung des zweiten Öffnungsbereichs abnimmt.

Gemäß einer weiteren Ausführungsform werden das mehrschichtige Blech und/oder der hohlzylindrische Grundkörper mittels elektromagnetischer Impulsumformung (EMPT, elektromagnetischen Pulstechnologie) umgeformt. Das Umformen durch elektromagnetische Impulsumformung kann beispielsweise beim und/oder nach dem oben beschriebenen Umformen des Blechs zum hohlzylindrischen Grundkörper erfolgen. Dadurch kann vorteilhafterweise die Rundlaufgenauigkeit des Adapterbauteils erhöht werden.

Weitere Vorteile und vorteilhafte Ausführungsformen des hier beschriebenen Adapterbauteils und des hier beschriebenen Verfahrens zur Herstellung eines Adapterbauteils ergeben sich aus den im Folgenden in Verbindung mit den Figuren 1 bis 4 beschriebenen Ausführungsformen. Es zeigen:
- Figur 1: eine schematische Darstellung eines Adapterbauteils zum Verbinden zweier Bauteile gemäß einem Ausführungsbeispiel, und
- Figuren 2 bis 4: schematische Darstellungen von Verfahren zur Herstellung eines hier beschriebenen Adapterbauteils gemäß weiteren Ausführungsbeispielen.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben groß dimensioniert dargestellt sein.

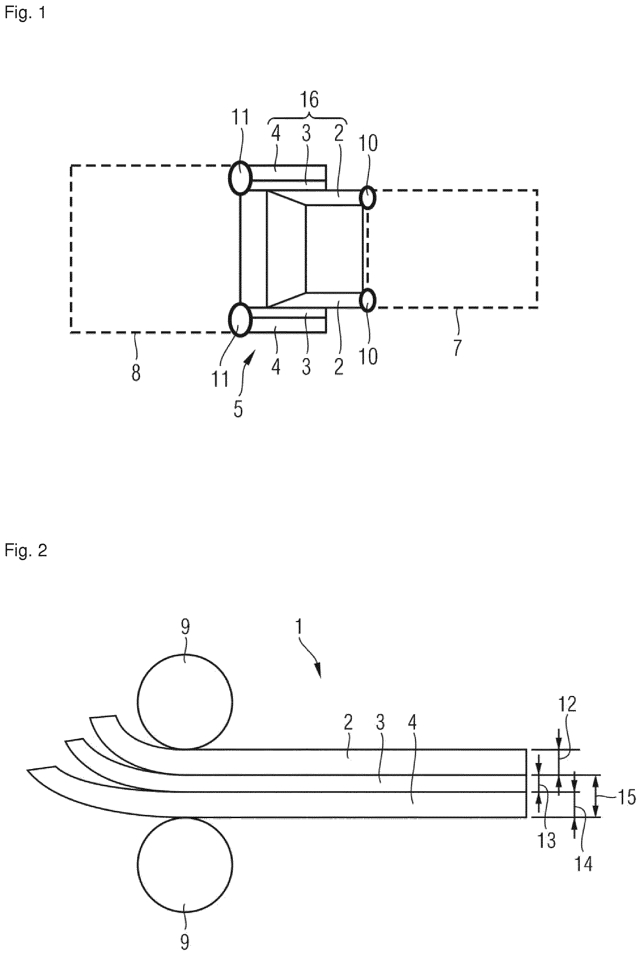

Figur 1 zeigt eine schematische Darstellung eines Adapterbauteils 5 zum Verbinden eines Stahlbauteils 7 mit einem Leichtmetallbauteil 8. Das Adapterbauteil 5 weist einen aus einem umgeformten mehrschichtigen Blech gebildeten Grundkörper 16 auf, welche eine Stahllastübertragungsschicht 2, eine Zwischenbindungsschicht 3 und eine Leichtmetalllastübertragungsschicht 4 aufweist. Der Grundkörper 16 weist eine hohlzylindrische Form auf. Die Zwischenbindungsschicht 3 und die Leichtmetalllastübertragungsschicht 4 weisen vorzugsweise ein Leichtmetall auf, und die Leichtmetalllastübertragungsschicht 4 weist vorzugsweise eine größere mechanische Stabilität als die Zwischenbindungsschicht 3 auf.

Die Stahllastübertragungsschicht 2 ist in einem an einen ersten Öffnungsbereich des hohlzylindrischen Grundkörpers 16 angrenzenden Teilabschnitt weder von der Zwischenbindungsschicht 3 noch von der Leichtmetalllastübertragungsschicht 4 bedeckt. Dadurch kann ein aluminiumfreier Endbereich zum Verschweißen des Adapterbauteils 5 mit einem Stahlbauteil 7 bereitgestellt werden. Das Stahlbauteil 7 kann mit der Stahllastübertragungsschicht 2 des Adapterbauteils 5 über eine Stahlschweißnaht 10 verschweißt und somit an dem Adapterbauteil 5 fixiert werden.

Die Zwischenbindungsschicht 3 ist in einem an einen zweiten Öffnungsbereich des hohlzylindrischen Grundkörpers 16 angrenzenden Teilabschnitt nicht von der Stahllastübertragungsschicht 2 bedeckt. Dadurch kann ein stahlfreier Endbereich zum Verschweißen des Adapterbauteils 5 mit einem Leichtmetallbauteil 8 zur Verfügung gestellt werden. Weiterhin nimmt die Schichtdicke der Stahllastübertragungsschicht 2 in Richtung des zweiten Öffnungsbereichs ab. Ein Leichtmetallbauteil 8, das z.B. als Aluminiumbauteil ausgebildet ist, kann mit der Leichtmetalllastübertragungsschicht 8 des Adapterbauteils 5 über eine Leichtmetallschweißnaht 11, die vorzugsweise als Aluminiumschweißnaht ausgebildet ist, verschweißt und somit ebenfalls an dem Adapterbauteil 5 fixiert werden.

In Figur 2 ist ein Herstellungsprozess eines mehrschichtigen Blechs 1 zur Herstellung eines Adapterbauteils 5 schematisch in einer Seitenansicht dargestellt. Das mehrschichtige Blech 1 weist eine Stahllastübertragungsschicht 2, eine Zwischenbindungsschicht 3 und eine Leichtmetalllastübertragungsschicht 4 auf, wobei die Zwischenbindungsschicht 3 zwischen der Stahllastübertragungsschicht 2 und der Leichtmetalllastübertragungsschicht 4 angeordnet ist. Bei der Herstellung des mehrschichtigen Blechs 1 werden die Stahllastübertragungsschicht 2, Zwischenbindungsschicht 3 und Leichtmetalllastübertragungsschicht 4 zwischen zwei Walzen 9 hindurchgeführt und miteinander in einem Walzplattierverfahren unter hohem Druck oder hohem Druck und Temperaturzufuhr verpresst. Zusätzlich kann eine anschließende Wärmebehandlung nach dem Verpressen vorgesehen sein. Somit wird eine feste Bindung der Stahllastübertragungsschicht 2, Zwischenbindungsschicht 3 und Leichtmetalllastübertragungsschicht 4 erzielt. Die Stahllastübertragungsschicht 2 weist eine Stahlschichtdicke 12, die Zwischenbindungsschicht 3 eine Zwischenschichtdicke 13 und die Leichtmetalllastübertragungsschicht 4 eine Lastschichtdicke 14 auf. Die Summe aus Zwischenschichtdicke 13 und Lastschichtdicke 14 wird als Schichtdickensumme 15 bezeichnet.

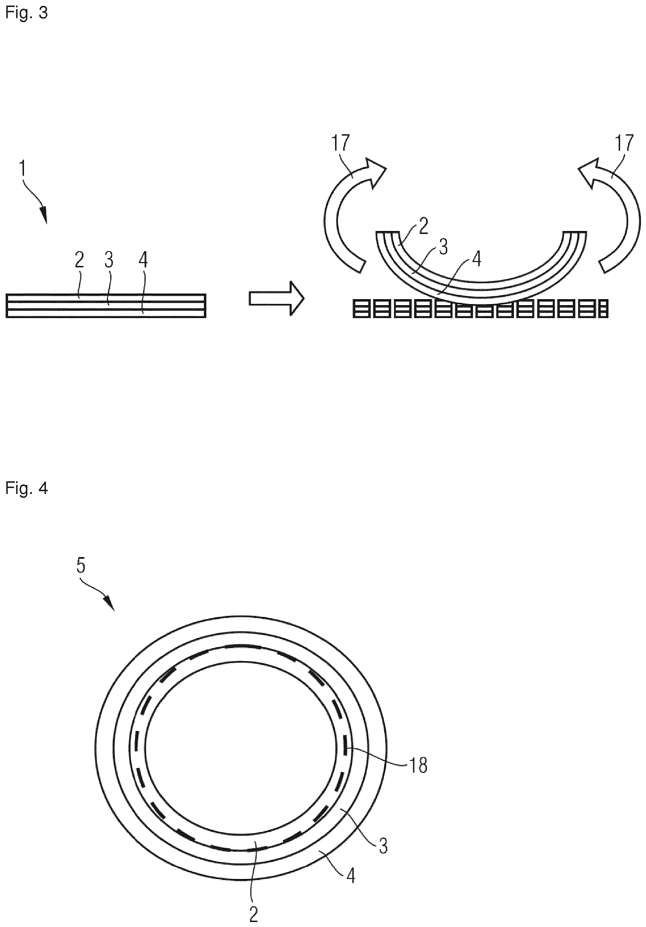

Figur 3 zeigt in einer schematischen Darstellung, wie ein mehrschichtiges Blech 1, welches beispielsweise im Zusammenhang mit der Figur 2 beschrieben hergestellt werden kann, durch einen Umformprozess 17 zu einem hohlzylindrischen Grundkörper umgeformt wird. Im Ausführungsbeispiel gemäß der Figur 3 wird das mehrschichtige Blech 1 derart umgeformt, dass die Stahllastübertragungsschicht 2 im Inneren des Grundkörpers und die Leichtmetalllastübertragungsschicht 4 außen angeordnet ist. Alternativ kann das mehrschichtige Blech zur Herstellung eines Adapterbauteils 5 auch derart umgeformt werden, dass die Stahllastübertragungsschicht außen und die Leichtmetalllastübertragungsschicht 4 innen angeordnet ist.

Figur 4 zeigt eine Aufsicht in Richtung einer Längsachse des hohlzylindrischen Grundkörpers des Adapterbauteils 5. Für eine exakte bereichsweise Entfernung der Stahllastübertragungsschicht 2 bzw. eine exakte bereichsweise Entfernung der Leichtmetalllastübertragungsschicht 4 durch eine spannende Bearbeitung 18 ist eine hohe Rundlaufgenauigkeit des Adapterbauteils 5 erforderlich. Da diese jedoch nach dem Umformprozess des mehrschichtigen Blechs 1 zum hohlzylindrischen Adapterbauteil 5 oftmals nicht ausreichend gegeben ist, besteht beispielsweise die Gefahr, dass bei einer spanenden Bearbeitung 18 zur Entfernung eines Teilbereichs der Leichtmetalllastübertragungsschicht 4 und der Zwischenbindungsschicht 3 auch ein Teil der Stahllastübertragungsschicht 2 entfernt wird, wodurch die Tragfähigkeit des Adapterbauteils 5 reduziert würde. Daher wird der hohlzylindrische Grundkörper 16 zur Erhöhung der Rundlaufgenauigkeit des Adapterbauteils 5 vorzugsweise mittels elektromagnetischer Impulsumformung umgeformt.

Das hier beschriebene Adapterbauteil 5 ermöglicht vorteilhafterweise einen Einsatz in dynamisch hochbelasteten Strukturen. Weiterhin zeichnet sich das Adapterbauteil 5 durch geringe Herstellkosten und ein geringes Gewicht aus.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Mehrschichtiges Blech
- 2: Stahllastübertragungsschicht
- 3: Zwischenbindungsschicht
- 4: Leichtmetalllastübertragungsschicht
- 5: Adapterbauteil
- 7: Stahlbauteil
- 8: Leichtmetallbauteil
- 9: Walze
- 10: Stahlschweißnaht
- 11: Leichtmetallschweißnaht
- 12: Stahlschichtdicke
- 13: Zwischenschichtdicke
- 14: Lastschichtdicke
- 15: Schichtdickensumme
- 16: Grundkörper
- 17: Umformung
- 18: spanende Bearbeitung

## Patentansprüche

1. Adapterbauteil (5) zum Verbinden eines Stahlbauteils (7) mit einem Leichtmetallbauteil (8) und für den Einsatz in dynamisch hochbelasteten Strukturen, aufweisend einen aus einem umgeformten mehrschichtigen Blech (1) gebildeten Grundkörper (16), wobei das mehrschichtige Blech (1) mindestens eine Stahllastübertragungsschicht (2), eine Zwischenbindungsschicht (3) und eine Leichtmetalllastübertragungsschicht (4) aufweist, wobei die Zwischenbindungsschicht (3) zwischen der Stahllastübertragungsschicht (2) und der Leichtmetalllastübertragungsschicht (4) angeordnet ist,
**dadurch gekennzeichnet,**
**dass** die Zwischenbindungsschicht (3) und die Leichtmetalllastübertragungsschicht (4) ein Leichtmetall aufweisen, wobei die Leichtmetalllastübertragungsschicht (4) eine größere Streckgrenze und/oder eine größere Zugfestigkeit und/oder eine größere Härte als die Zwischenbindungsschicht (3) aufweist, und dass der Grundkörper die Form eines Hohlzylinders aufweist.

2. Adapterbauteil (5) nach Anspruch 1, wobei die Stahllastübertragungsschicht (2) in einem an einen ersten Öffnungsbereich des hohlzylindrischen Grundkörpers (16) angrenzenden Teilabschnitt nicht von der Zwischenbindungsschicht (3) und/oder Leichtmetalllastübertragungsschicht (4) bedeckt ist.

3. Adapterbauteil (5) nach einem der Ansprüche 1 oder 2, wobei die Zwischenbindungsschicht (3) und/oder die Leichtmetalllastübertragungsschicht (4) in einem an einen zweiten Öffnungsbereich des hohlzylindrischen Grundkörpers (16) angrenzenden Teilabschnitt nicht von der Stahllastübertragungsschicht (2) bedeckt sind.

4. Adapterbauteil (5) nach einem der vorhergehenden Ansprüche, wobei
- die Leichtmetalllastübertragungsschicht (4) eine Al-Legierung aufweist oder daraus besteht,
- die Zwischenbindungsschicht (3) modifiziertes Al 99 aufweist oder aus modifiziertem Al 99 besteht, und
- die Stahllastübertragungsschicht (2) einen Sondergütestahl aufweist oder aus einem Sondergütestahl besteht.

5. Adapterbauteil (5) nach wenigstens einem der vorangegangenen Ansprüche, wobei die Leichtmetalllastübertragungsschicht (4) einen Siliziumgehalt von weniger als 20 Gew.-% aufweist.

6. Adapterbauteil (5) nach wenigstens einem der vorangegangenen Ansprüche, wobei die Stahllastübertragungsschicht (2) eine Stahlschichtdicke (12) zwischen 0,8 mm und 2,3 mm und/oder die Zwischenbindungsschicht (3) mit der Leichtmetalllastübertragungsschicht (4) zusammen eine Schichtdickensumme (15) zwischen 2,0 mm und 7,0 mm aufweisen.

7. Adapterbauteil (5) nach wenigstens einem der vorangegangenen Ansprüche, wobei eine Lastschichtdicke (14) der Leichtmetalllastübertragungsschicht (4) mindestens doppelt so groß wie eine Zwischenschichtdicke (13) der Zwischenbindungsschicht (3) ist.

8. Verbindungsanordnung, aufweisend ein erstes Bauteil (7) aus einem ersten Werkstoff, ein zweites Bauteil (8) aus einem zweiten Werkstoff sowie ein Adapterbauteil (5) gemäß einem der Ansprüche 1 bis 7, wobei das erste Bauteil (7) mittels des Adapterbauteils (5) mit dem zweiten Bauteil (8) verbunden ist.

9. Verbindungsanordnung gemäß Anspruch 8, wobei das erste Bauteil (7) als Stahlbauteil ausgebildet ist und das zweite Bauteil (8) als Leichtmetallbauteil ausgebildet ist, und wobei das Stahlbauteil (7) derart mittels des Adapterbauteils (5) mit dem Leichtmetallbauteil (8) verbunden ist, dass die Stahllastübertragungsschicht (2) des Adapterbauteils (5) mit dem Stahlbauteil (7) verbunden ist und die Leichtmetalllastübertragungsschicht (4) des Adapterbauteils (5) mit dem Leichtmetallbauteil (8) verbunden ist.

10. Verbindungsanordnung gemäß Anspruch 9, wobei das Stahlbauteil (7) mit der Stahllastübertragungsschicht (2) des Adapterbauteils (5) verschweißt ist und das Leichtmetallbauteil (8) mit der Leichtmetalllastübertragungsschicht (4) des Adapterbauteils (5) verschweißt ist.

11. Verfahren zur Herstellung eines Adapterbauteils (5) gemäß einem der Ansprüche 1 bis 7, aufweisend die folgenden Schritte:
- Herstellen eines mehrschichtigen Blechs (1), welches eine Stahllastübertragungsschicht (2), eine Zwischenbindungsschicht (3) und eine Leichtmetalllastübertragungsschicht (4) aufweist, und
- Umformen des mehrschichtigen Blechs (1) zu einem hohlzylindrischen Grundkörper (16).

12. Verfahren nach Anspruch 11, wobei an einen ersten Öffnungsbereich des hohlzylindrischen Grundkörpers (16) angrenzende Teilabschnitte der Leichtmetalllastübertragungsschicht (4) und der Zwischenbindungsschicht (3) entfernt werden.

13. Verfahren nach einem der Ansprüche 11 oder 12, wobei ein an einen zweiten Öffnungsbereich des hohlzylindrischen Grundkörpers (16) angrenzender Teilabschnitt der Stahllastübertragungsschicht (2) entfernt wird.

14. Verfahren nach einem der Ansprüche 11 bis 13, wobei das mehrschichtige Blech (1) und/oder der hohlzylindrische Grundkörper (16) zur Erhöhung der Rundlaufgenauigkeit des Adapterbauteils (5) mittels elektromagnetischer Impulsumformung umgeformt werden.

## Claims

1. Adapter component (5) for joining a steel component (7) and a light metal component (8) and for use in dynamically highly loaded structures, having a main body (16) formed from a formed multi-layer sheet (1), wherein the multi-layer sheet (1) has at least one steel load transmission layer (2), an intermediate binding layer (3) and a light metal load transmission layer (4), wherein the intermediate binding layer (3) is arranged between the steel load transmission layer (2) and the light metal load transmission layer (4),
**characterized**
**in that** the intermediate binding layer (3) and the light metal load transmission layer (4) have a light metal, wherein the light metal load transmission layer (4) has a greater yield limit and/or a greater tensile strength and/or a greater hardness than the intermediate binding layer (3), and in that the main body has the shape of a hollow cylinder.

2. Adapter component (5) according to Claim 1, wherein the steel load transmission layer (2) is not covered by the intermediate binding layer (3) and/or light metal load transmission layer (4) in a part section adjoining a first opening region of the hollow cylindrical main body (16).

3. Adapter component (5) according to either one of Claims 1 and 2, wherein the intermediate binding layer (3) and/or the light metal load transmission layer (4) are not covered by the steel load transmission layer (2) in a part section adjoining a second opening region of the hollow cylindrical main body (16).

4. Adapter component (5) according to any one of the preceding claims, wherein
- the light metal load transmission layer (4) has an Al alloy or consists thereof,
- the intermediate binding layer (3) has modified A199 or consists of modified A199, and
- the steel load transmission layer (2) has a special quality steel or consists of a special quality steel.

5. Adapter component (5) according to at least one of the preceding claims, wherein the light metal load transmission layer (4) has a silicon content of less than 20% by weight.

6. Adapter component (5) according to at least one of the preceding claims, wherein the steel load transmission layer (2) has a steel layer thickness (12) between 0.8 mm and 2.3 mm and/or the intermediate binding layer (3) together with the light metal load transmission layer (4) has a layer thickness sum (15) between 2.0 mm and 7.0 mm.

7. Adapter component (5) according to at least one of the preceding claims, wherein a load layer thickness (14) of the light metal load transmission layer (4) is at least twice as thick as an intermediate layer thickness (13) of the intermediate binding layer (3) .

8. Connection assembly, having a first component (7) consisting of a first material, a second component (8) consisting of a second material and an adapter component (5) according to any one of Claims 1 to 7, wherein the first component (7) is joined with the second component (8) by means of the adapter component (5).

9. Connection assembly according to Claim 8, wherein the first component (7) is designed as a steel component and the second component (8) is designed as a light metal component, and wherein the steel component (7) is joined with the light metal component (8) by means of the adapter component (5) in such a manner that the steel load transmission layer (2) of the adapter component (5) is joined with the steel component (7) and the light metal load transmission layer (4) of the adapter component (5) is joined with the light metal component (8).

10. Connection assembly according to Claim 9, wherein the steel component (7) is welded to the steel load transmission layer (2) of the adapter component (5) and the light metal component (8) is welded to the light metal load transmission layer (4) of the adapter component (5).

11. Method for producing an adapter component (5) according to any one of Claims 1 to 7, comprising the following steps:
- producing a multi-layer sheet (1), which has a steel load transmission layer (2), an intermediate binding layer (3) and a light metal load transmission layer (4), and
- forming the multi-layer sheet (1) to form a hollow cylindrical main body (16).

12. Method according to Claim 11, wherein part sections of the light metal load transmission layer (4) and of the intermediate binding layer (3) adjoining a first opening region of the hollow cylindrical main body (16) are removed.

13. Method according to either one of Claims 11 and 12, wherein a part section of the steel load transmission layer (2) adjoining a second opening region of the hollow cylindrical main body (16) is removed.

14. Method according to any one of Claims 11 to 13, wherein the multi-layer sheet (1) and/or the hollow cylindrical main body (16) are formed by means of electromagnetic pulse technology for increasing the concentricity precision of the adapter component (5) .

## Revendications

1. Composant adaptateur (5) destiné à relier un composant (7) en acier à un composant (8) en métal léger et destiné à être utilisé dans des structures à fortes sollicitation dynamiques, ledit composant adaptateur comportant un corps de base (16) formé à partir d'une tôle multicouche (1) mise en forme, la tôle multicouche (1) comportant au moins une couche de transfert de charge en acier (2), une couche de liaison intermédiaire (3) et une couche de transfert de charge en métal léger (4), la couche de liaison intermédiaire (3) étant disposée entre la couche de transfert de charge en acier (2) et la couche de transfert de charge en métal léger (4),
**caractérisé en ce que**
la couche de liaison intermédiaire (3) et la couche de transfert de charge en métal léger (4) comportent un métal léger,
la couche de transfert de charge en métal léger (4) présentant une limite d'élasticité et/ou une résistance à la traction et/ou une dureté supérieure(s) à celle(s) de la couche de liaison intermédiaire (3), et **en ce que** le corps de base a la forme d'un cylindre creux.

2. Composant adaptateur (5) selon la revendication 1, la couche de transfert de charge en acier (2) n'étant pas recouverte par la couche de liaison intermédiaire (3) et/ou la couche de transfert de charge en métal léger (4) dans une portion adjacente à une première zone d'ouverture du corps de base (16) en forme de cylindre creux.

3. Composant adaptateur (5) selon l'une des revendications 1 et 2, la couche de liaison intermédiaire (3) et/ou la couche de transfert de charge en métal léger (4) n'étant pas recouvertes par la couche de transfert de charge en acier (2) dans une portion adjacente à une deuxième zone d'ouverture du corps de base (16) en forme de cylindre creux.

4. Composant adaptateur (5) selon l'une des revendications précédentes,
- la couche de transfert de charge en métal léger (4) comportant un alliage d'Al ou étant constituée d'alliage d'Al,
- la couche de liaison intermédiaire (3) comportant de l'Al 99 modifié ou étant constituée d'Al 99 modifié, et
- la couche de transfert de charge en acier (2) comportant un acier de qualité spéciale ou étant constituée d'acier de qualité spéciale.

5. Composant adaptateur (5) selon l'une au moins des revendications précédentes, la couche de transfert de charge en métal léger (4) ayant une teneur en silicium inférieure à 20 % en poids.

6. Composant adaptateur (5) selon l'une au moins des revendications précédentes, la couche de transfert de charge en acier (2) ayant une épaisseur de couche d'acier (12) comprise entre 0,8 mm et 2,3 mm et/ou la couche de liaison intermédiaire (3) ayant conjointement avec la couche de transfert de charge en métal léger (4) une épaisseur de couche totale (15) comprise entre 2,0 mm et 7,0 mm.

7. Composant adaptateur (5) selon l'une au moins des revendications précédentes, une épaisseur de couche de charge (14) de la couche de transfert de charge en métal léger (4) étant au moins deux fois supérieure à une épaisseur de couche intermédiaire (13) de la couche de liaison intermédiaire (3).

8. Ensemble de liaison, comprenant un premier composant (7) en une première matière, un deuxième composant (8) composé d'une deuxième matière et un composant adaptateur (5) selon l'une des revendications 1 à 7, le premier composant (7) étant relié au deuxième composant (8) au moyen du composant adaptateur (5).

9. Ensemble de liaison selon la revendication 8, le premier composant (7) étant conçu comme un composant en acier et le deuxième composant (8) étant conçu comme un composant en métal léger, et le composant en acier (7) étant relié au composant en métal léger (8) au moyen du composant adaptateur (5) de manière à ce que la couche de transfert de charge en acier (2) du composant adaptateur (5) soit reliée au composant en acier (7) et la couche de transfert de charge en métal léger (4) du composant adaptateur (5) soit reliée au composant en métal léger (8).

10. Ensemble de liaison selon la revendication 9, le composant en acier (7) étant soudé à la couche de transfert de charge en acier (2) du composant adaptateur (5) et le composant en métal léger (8) étant soudé à la couche de transfert de charge en métal léger (4) du composant adaptateur (5).

11. Procédé pour la fabrication d'un composant adaptateur (5) selon l'une des revendications 1 à 7, comprenant les étapes suivantes :
- production d'une tôle multicouche (1) qui comporte une couche de transfert de charge en acier (2), une couche de liaison intermédiaire (3) et une couche de transfert de charge en métal léger (4), et
- mise en forme de la tôle multicouche (1) pour obtenir un corps de base (16) en forme de cylindre creux.

12. Procédé selon la revendication 11, des portions de la couche de transfert de charge en métal léger (4) et de la couche de liaison intermédiaire (3), lesquelles portions sont adjacentes à une première zone d'ouverture du corps de base (16) en forme de cylindre, étant retirées.

13. Procédé selon l'une des revendications 11 et 12, une portion de la couche de transfert de charge en acier (2), laquelle portion est adjacente à une deuxième zone d'ouverture du corps de base (16) en forme de cylindre creux, étant retirée.

14. Procédé selon l'une des revendications 11 à 13, la tôle multicouche (1) et/ou le corps de base (16) en forme de cylindre creux étant mis en forme par formage à impulsions électromagnétiques pour augmenter la précision de rotation du composant adaptateur (5).
